(19)

Europäisches
Patentamt
European
Patent Office
Office européen
des brevets

(11) **EP 2 400 455 A1**

(12) **EUROPEAN PATENT APPLICATION**

(43) Date of publication:
28.12.2011 Bulletin 2011/52

(51) Int Cl.:
*G06T 1/60* *(2006.01)*

(21) Application number: 11169871.8

(22) Date of filing: 14.06.2011

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **22.06.2010 US 820217**

(71) Applicant: **Ceva D.S.P. Ltd.
Herzlia Pituach 46120 (IL)**

(72) Inventor: **Jacob (Yaakov), Jeffrey Allan (Alon)
43308 Raanana (IL)**

(74) Representative: **Dr. Graf & Partner AG
Intellectual Property
Herrenacker 15
Postfach 518
8201 Schaffhausen (CH)**

(54) **System, data structure, and method for transposing multi-dimensional data to switch between vertical and horizontal filters**

(57)     A system, processor, and method for filtering multi-dimensional data, for example, image data. A processor may receive an instruction to execute a horizontal filter by combining multi-dimensional data values horizontally aligned in a single row of a first data structure. A second data structure may include a plurality of individually addressable internal memory units. A load unit may load the horizontally aligned values in a transposed orientation for storage as vertically aligned values in a single column in the second data structure in the individually addressable memory units. Each transposed value in the single column may be separately stored in a different respective one of the individually addressable memory units. The processor may independently manipulate and combine each transposed value designated for combination by the horizontal filter by individually accessing the separate memory units.

Fig. 1

## Description

## BACKGROUND OF THE INVENTION

The present invention relates to applications, and more particularly to a system and method for filtering data, for example, in video and imaging applications.

A wide range of filters, both linear and non-linear, may be applied to process image data. Filters may improve visual quality by sharpening edges in images or smoothing sharp edges in images by interpolating or extrapolating a linear or non-linear combination of adjacent pixels. Filters may be directional, for example, smoothing or extrapolating in a vertical, horizontal, or diagonal direction. Directional filters may combine values of adjacent pixels which are aligned in the specific direction of the filter. For example, vertical filters may combine values of adjacent pixels which are vertically aligned in a column, while horizontal filters may combine values of adjacent pixels which are horizontally aligned in a row.

Some filters, such as, motion compensation filters, may reduce motion induced artifacts, while others may improve the compression ratio or accuracy of encoding or decoding image data. In one example, to decode image data when block coding techniques are used, a de-blocking filter may be applied to blocks in decoded video to smooth edges between macroblocks. In another example, a running filter may be applied to each pixel boundary to smooth all pixel transitions uniformly across an image.

## BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings. Specific embodiments of the present invention will be described with reference to the following drawings, wherein:

Fig. **1** is a schematic illustration of a system in accordance with embodiments of the invention;

Fig. **2A** is a schematic illustration of a data array for storing video and imaging data helpful in understanding embodiments of the invention;

Figs. **2B** is a schematic illustration of a data array for storing video and image data in accordance with embodiments of the invention;

Fig. **3** is a schematic illustration of the data array of Fig. **2B** being filtered in accordance with embodiments of the invention; and

Fig. **4** is a flowchart of a method in accordance with embodiments of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

## DETAILED DESCRIPTION OF EMBODIMENTS OF THE INVENTION

In the following description, various aspects of the present invention will be described. For purposes of explanation, specific configurations and details are set forth in order to provide a thorough understanding of the present invention. However, it will also be apparent to one skilled in the art that the present invention may be practiced without the specific details presented herein. Furthermore, well known features may be omitted or simplified in order not to obscure the present invention.

Unless specifically stated otherwise, as apparent from the following discussions, it is appreciated that throughout the specification discussions utilizing terms such as "processing," "computing," "calculating," "determining," or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices.

A multi-dimensional array of data elements stored in a computer memory may represent a digital image including a multi-dimensional grid or array of pixels, where each data element uniquely corresponds to a pixel value.

A processor may retrieve data (for example, pixel) values from an internal or external computer memory to be stored in individually addressable memory units, for example, vector registers, internal to or directly accessible by the processor. Typically, each vector register stores a vector including an array of values from a single row or row segment of the data array. A processor typically manipulates an entire data set stored in each individually addressable memory unit together, dependently. However, to apply a filter, a processor should combine adjacent data values in a linear or non-linear combination or weighted sum, where each value may have a different weight. Since values combined in a linear or non-linear combination with different weights may be independently manipulated, filters may only be applied to values stored in separate registers in each computational cycle.

Since a vertical filter combines values in a column, which are typically stored in separate registers or memory units, a processor may independently manipulate and combine the vertical values in one cycle. However, a horizontal filter combines values in a single row, which are typically stored in the same register or memory unit and therefore cannot be independently manipulated to horizontally filter the data in one cycle.

In conventional imaging systems, to solve this problem and execute horizontal filters, some processors further sub-divide row segments of horizontal pixel values into individual registers, so that each register stores a value for an individual pixel to be independently manipulated. This technique uses a great amount of memory and address resources and adds extra computational cycles. Other conventional processors may iteratively execute each operation intended for a single data value in the linear combination on all of the multiple data values from the same row stored in the same register or memory unit. This technique executes unnecessary operations on data values for which the operations are not intended and also requires a separate computational cycle to execute the intended operation for each data value in the register or individually addressable memory unit.

Embodiments of the invention are directed to a system, method, and processor, that, in a single computational cycle, independently load or store each data value retrieved from a row segment of an image to independently manipulate the data values for a horizontal filter without the drawbacks of conventional systems.

According to embodiments of the invention, a processor executing a horizontal filter, may retrieve, load and store each row of data values in a data block to internal memory in a transposed orientation (for example, rotated from a row to a column). Accordingly, values for horizontally adjacent pixels or other data, conventionally stored in a single individually addressable memory unit in internal memory where they are dependent and may not be automatically combined, are retrieved from internal memory oriented as a column. Since each individually addressable memory unit stores elements horizontally oriented in a single row of the multi-dimensional array, and each element in a column is in a different row, each element in the reoriented column may be automatically separated into a different respective one of the individually addressable memory units where it may be independently manipulated. By retrieving data values for horizontal filters in a transposed orientation and retrieving data values for vertical filters in a non-transposed orientation (they are already ideally oriented), a processor operating according to embodiments of the invention automatically separate adjacent data values to be combined in the same linear combination into different individually addressable memory unit in internal processor memory. Accordingly, the processor may independently manipulate all adjacent data values combined in either vertical or horizontal filters, accessed in a single computational cycle, in parallel, from their respective registers.

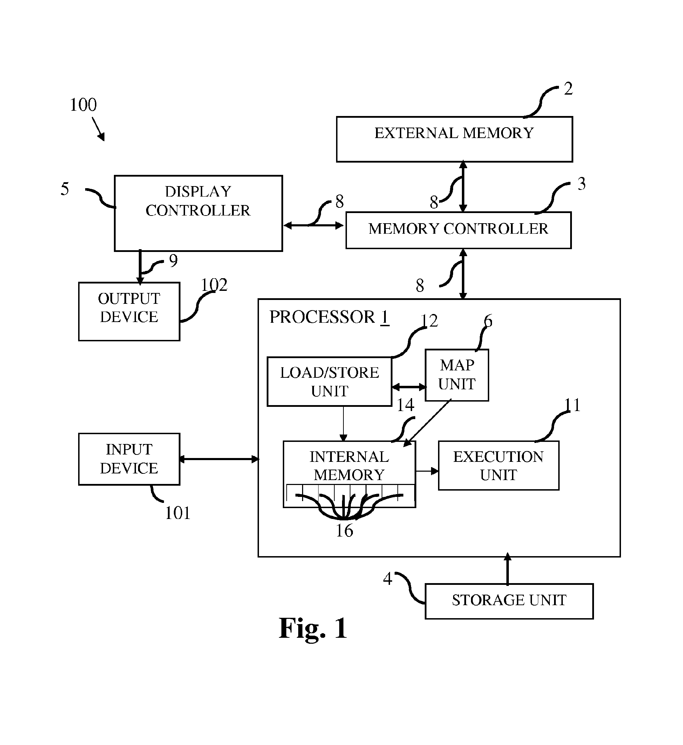

Reference is made to Fig. **1**, which is schematic illustration of an exemplary device according to embodiments of the invention.

Device **100** may include a computer device, video or image capture or playback device, cellular device, or any other digital device such as a cellular telephone, personal digital assistant (PDA), video game console, etc. Device **100** may include any device capable of executing a series of instructions to record, save, store, process, edit, display, project, receive, transfer, or otherwise use or manipulate video or image data. Device **100** may include an input device **101**. When device **100** includes recording capabilities, input device **101** may include an imaging device such as a camcorder including an imager, one or more lens(es), prisms, or mirrors, etc. to capture images of physical objects via the reflection of light waves therefrom and/or an audio recording device including an audio recorder, a microphone, etc., to record the projection of sound waves thereto.

When device **100** includes image processing capabilities, input device **101** may include a pointing device, click-wheel or mouse, keys, touch screen, recorder/microphone using voice recognition, other input components for a user to control, modify, or select from video or image processing operations. Device **100** may include an output device **102** (for example, a monitor, projector, screen, printer, or display) for displaying video or image data on a user interface according to a sequence of instructions executed by processor **1**.

An exemplary device **100** may include a processor **1**. Processor **1** may include a central processing unit (CPU), a digital signal processor (DSP), a microprocessor, a controller, a chip, a microchip, a field-programmable gate array (FPGA), an application-specific integrated circuit (ASIC) or any other integrated circuit (IC), or any other suitable multi-purpose or specific processor or controller.

Device **100** may include an external memory unit **2** and a memory controller **3**. Memory controller **3** may control the transfer of data into and out of processor **1**, external memory unit **2**, and output device **102**, for example via one or more data buses **8**. Device **100** may include a display controller **5** to control the transfer of data displayed on output device **102** for example via one or more data buses **9**.

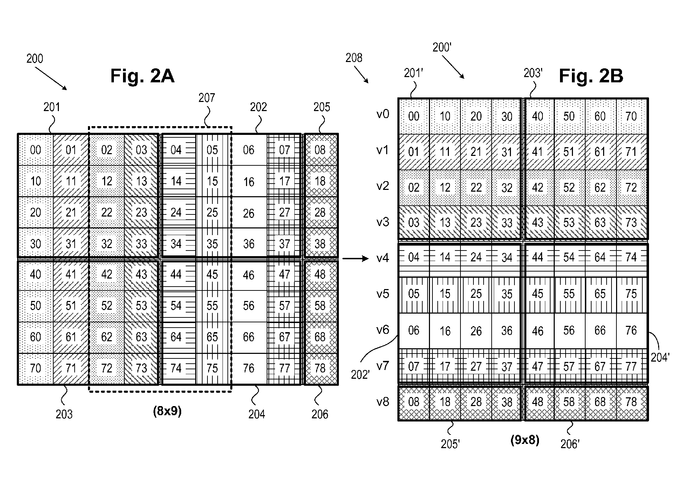

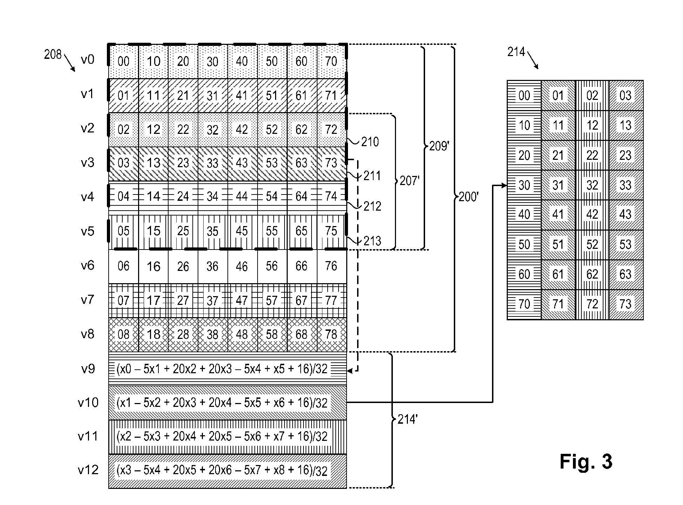

Device **100** may include a storage unit **4**. Storage unit **4** may store video or image data in a compressed form, while external memory unit **2** may store video or image data in an uncompressed form; however, either compressed or uncompressed data may be stored in either memory unit and other arrangements for storing data in a memory or memories may be used. Each uncompressed data element may have a value uniquely associated with a single pixel in an image or video frame, while each compressed data element may represent a variation or change between the value(s) of pixels within a frame or between consecutive frames in a video stream or moving image. When used herein, unless stated otherwise, a data element generally refers to an uncompressed data element, for example, relating to a single pixel value or pixel component value (for example, a YUV or RGB value) in a single image frame, and not a compressed data element, for example, relating to a change between values for a pixel in consecutive image frames. Uncompressed data for an array of pixels may be represented in a corresponding multi-dimensional data array (for example, as in Figs. **2A**, **2B**, and **3**), while compressed data may be represented as a data stream or one-dimensional (1D) data array (not shown).

Internal memory unit **14** may be a memory unit directly accessible to or internal to (physically attached or stored within) processor **1**. Internal memory unit **14** may be a short-term memory unit, external memory unit **2** may be a long-term or short-term memory unit, and storage unit **4** may be a long-term memory unit; however, any of these memories may be long-term or short-term memory units. Storage unit **4** may include one or more external drivers, such as, for example, a disk or tape drive or a memory in an external device such as the video, audio, and/or image recorder. Internal memory unit **14**, external memory unit **2**, and storage unit **4** may include, for example, random access memory (RAM), dynamic RAM (DRAM), flash memory, cache memory, volatile memory, non-volatile memory or other suitable memory units or storage units. Internal memory unit **14**, external memory unit **2**, and storage unit **4** may be implemented as separate (for example, "off-chip") or integrated (for example, "on-chip") memory units. In some embodiments in which there is a multi-level memory or a memory hierarchy, storage unit **4** and external memory unit **2** may be off-chip and internal memory unit **14** may be on-chip. For example, internal memory unit **14** may include a tightly-coupled memory (TCM), a buffer, or a cache, such as, an L-1 cache or an L-2 cache. An L-1 cache may be relatively more integrated with processor **1** than an L-2 cache and may run at the processor clock rate whereas an L-2 cache may be relatively less integrated with processor **1** than the L-1 cache and may run at a different rate than the processor clock rate. In one embodiment, processor **1** may use a direct memory access (DMA) unit to read, write, and/or transfer data to and from memory units, such as external memory unit **2**, internal memory unit **14**, and/or storage unit **4**. Other or additional memory architectures may be used.

Processor **1** may include a load/store unit **12**, a mapping unit **6**, and an execution unit **11**. Processor **1** may request, retrieve, and process data from external memory unit **2**, internal memory unit **14**, and/or storage unit **4** and may control, in general, the pipeline flow of operations or instructions executed on the data.

Processor **1** may receive an instruction, for example, from a program memory (for example, in external memory unit **2** and/or storage unit **4**) to filter one or more pixel(s) in a digital video or image. The instruction may indicate the set of pixels or addresses thereof to be filtered, the relative locations of the adjacent pixels used for filtering the set of pixels, the weights or the equation of the weighted sum of the filter, and/or whether the filter is a horizontal filter, a vertical filter, a filter having a different direction, or a non-directional filter. In one embodiment, a flag or other register value(s) may indicate if the filter is a vertical filter (flag==0) or a horizontal filter (flag==1). Processor **1** may iteratively execute the filter on each sequential pixel, row, column, block, or other set of pixels, in the image, for example, until the entire image is filtered.

Processor **1** may include a plurality of individually addressable memory units **16** for processing data element. Individually addressable memory unit **16** (for example, vector registers) may be internal to processor **1** and either internal/integrated with internal processor **14** or external/separate from internal processor **14**. In each computational cycle, load/store unit **12** may retrieve or fetch a set or "burst" of sequential data elements from a single row of a data structure, for example, in a TCM in internal memory unit **14** (or external memory unit **2**), and may load and store this data into individually addressable memory units **16** of internal memory unit **14**. Alternatively, instead of retrieving data elements from a single row, load/store unit **12** may retrieve sequential data elements from a single column of the data structures in each load/store operation. In yet another embodiment, in each cycle, load/store unit **12** may retrieve a multi-dimensional data block (for example, multi-dimensional data array **200** of Fig. **2A**), for example, as described in co-pending U.S. Application No. 12/797,727, filed June 10, 2010, assigned to the common assignee of the present invention.

A conventional vector register typically stores a plurality of sequential data values retrieved from a single row of a multi-dimensional data structure. A conventional processor typically processes each data values stored in the same vector register, together, like different coordinates of the same vector. To execute a vertical filter combining data values from a column of the data structure, the conventional processor may store each data value, retrieved from a different row of the data structure, separately in a different register, where the data values may be independently manipulated simultaneously. However, the conventional processor typically retrieves data values to be combined in a horizontal filter from the same row of the data structure and therefore stores the data values in the same register where they may not be independently manipulated. Accordingly, a new solution is needed for horizontal filtering.

According to embodiments of the invention, when processor **1** executes a horizontal filter, load/store unit **12** stores each row of data values in a data block in registers or individually addressable memory units **16** of internal memory unit **14** in a transposed orientation (for example, rotated from a row to a column). Accordingly, for images, pixel values that are horizontally aligned in a row of an image are vertically aligned in a column in individually addressable memory units **16**. Each transposed vertically aligned pixel value is in a different row and may therefore be stored in a different individually addressable memory unit **16**. Processor **1** may individually manipulate each different memory unit **16** and accordingly, each data value in the linear combination may likewise be independently retrieved and manipulated in a single computational cycle. Accordingly, processor **1** may retrieve values for horizontal filters in a transposed orientation (to vertically align values to be combined into a single row segment) and values for vertical filters in a non-transposed orientation (values to be combined are already vertically aligned), which may automatically separate data values into different memory units **16** for simultaneously independently manipulating data values combined for applying both vertical and horizontal filters to the multi-dimensional data.

Embodiments of the invention may be described in greater detail in the example that follows, which describes filtering a (4x4) sub-array representing a (4x4) pixel sub-region of an image, where each sub-array includes (16) pixel values, $p_{ij}$; for example, as follows (other sub-arrays of different sizes or dimensions may equivalently be used):

| $p_{11}$ | $p_{12}$ | $p_{13}$ | $p_{14}$ |
|---|---|---|---|
| $p_{21}$ | $p_{22}$ | $p_{23}$ | $p_{24}$ |
| $p_{31}$ | $p_{32}$ | $p_{33}$ | $p_{34}$ |
| $p_{41}$ | $p_{42}$ | $p_{43}$ | $p_{44}$ |

Processor **1** executing a vertical filter may combine values of vertically adjacent pixels from a column segment of an image to generate each filtered pixel value. For example, a linear combination of adjacent vertical pixels from the $j_{th}$ column of the data block above may be $(a)*(p_{1j}) + (b)*(p_{2j}) + (c)*(p_{3j}) + (d)*(p_{4j})$, where $a$, $b$, $c$, and $d$, are rational or integer values. Processor **1** executing a horizontal filter may combine values of horizontally adjacent pixels from a row segment of an image to generate each filtered pixel value. For example, a linear combination of horizontally adjacent pixel values from the $i$th row of the data block above may be $(e)*(p_{i1}) + (f)*(p_{i2}) + (g)*(p_{i3}) + (h)*(p_{i4})$, where $e$, $f$, $g$, and $h$, are rational or integer values. To combine adjacent pixel values in either a vertical or horizontal filter, processor **1** may independently multiply each combined pixel value, $p_{ij}$, by a different weight in the weighted sum.

Processor **1** may retrieve and store elements of the data block row-by-row in a set of (4) respective vector registers (for example, individually addressable memory units **16**), for example, as follows.
Register $v_1$ may store pixel values $p_{11}$, $p_{12}$, $p_{13}$, $p_{14}$.
Register $v_2$ may store pixel values $p_{21}$, $p_{22}$, $p_{23}$, $p_{24}$.
Register $v_3$ may store pixel values $p_{31}$, $p_{32}$, $p_{33}$, $p_{34}$.
Register $v_4$ may store pixel values $p_{41}$, $p_{42}$, $p_{43}$, $p_{44}$.

A vector (or array) processor **1** typically executes the same computation(s) on all elements, for example, pixel values, $p_{l1}$, $p_{l2}$, $p_{l3}$, and $p_{l4}$, stored in each vector register $v_l$, together. Since each register stores data elements from a single row, and vertical filters combine pixel values from a single column, processor **1** may separate each combined pixel value into a different respective register, $v_1$, $v_2$, $v_3$, $v_4$. Thus, processor **1** may independently multiply and combine vertically adjacent pixel values, $p_{1j}$, $p_{2j}$, $p_{3j}$, and $p_{4j}$.

To compute the vertical filter linear combination described above, for example, $(a)*(p_{11}) + (b)*(p_{21}) + (c)*(p_{31}) + (d)*(p_{41})$, processor **1** may compute the product of the pixel values in each register and the corresponding weight or multiplier. For example, to compute the term $(a)*(p_{1j})$ in the linear combination, processor **1** may multiply the values in the register, $v_1$, containing the pixel values, $p_{1j}$, by the multiplier, $a$, to generate the vector, $((a)*(p_{11}), (a)*(p_{12}), (a)*(p_{13}), (a)*(p_{14}))$. Similarly, to compute the next term in the linear combination, processor **1** may multiply the values in the register, $v_2$, by the multiplier, $b$, and so on. Processor **1** may combine the relevant terms $(a)*(p_{11})$, $(b)*(p_{21})$, $(c)*(p_{31})$, and $(d)*(p_{41})$ from the (4) products to generate the linear combination for the vertical filter, $(a)*(p_{11}) + (b)*(p_{21}) + (c)*(p_{31}) + (d)*(p_{41})$. Since each pixel value is in a different register, processor **1** may multiply each pixel value by a different multiplier in the same (or different) computational cycle. Since only a single term in each register is used for each linear combination and vector processor **1** executes the same computation on all elements of the vector register, extra terms may be generated as a byproduct of each vector computation. Computed terms not used in the linear combination to filter a current (1st) column of pixels, for example, extra terms $(a)*(p_{12})$, $(a)*(p_{13})$, and $(a)*(p_{14})$, may be used to filter the next respective spatially sequential (2nd, 3rd, and 4th) column of pixels in the same computational cycle.

For horizontal filters, values of horizontally aligned pixels, $p_{i1}$, $p_{i2}$, $p_{i3}$, and $p_{i4}$, are conventionally stored in a single register, $v_i$, and therefore processor **1** may not be able to individually manipulate or combine these pixels in the same computational cycle. To solve this problem, when executing a horizontal filter, processor **1** operating according to embodiments of the invention may retrieve each pixel values, $p_{ij}$, in a transposed orientation $p_{ji}$. Accordingly, processor **1** may store each set of pixel values, $p_{i1}$, $p_{i2}$, $p_{i3}$, and $p_{i4}$, representing pixels from an ($i$th) row of an image in registers as an ($i$th) column, for example, as follows:
Register $v_1$ may store pixel values $p_{11}$, $p_{21}$, $p_{31}$, $p_{41}$.
Register $v_2$ may store pixel values $p_{12}$, $p_{22}$, $p_{32}$, $p_{42}$.
Register $v_3$ may store pixel values $p_{13}$, $p_{23}$, $p_{33}$, $p_{43}$.
Register $v_4$ may store pixel values $p_{14}$, $p_{24}$, $p_{34}$, $p_{44}$.
Accordingly, processor **1** may re-orient the values of pixels, which are horizontally aligned in an image, as a column and thereby separate these values into respective registers, $v_1$, $v_2$, $v_3$, $v_4$. Such transposition is not needed to retrieve pixel values for vertical filters, which may already be vertically oriented.

Processor **1** may retrieve and store adjacent pixel values both from rows for horizontal filters and columns for vertical filters of internal memory **14** as columns separated among different registers (for example, individually addressable memory units **16**). Thus, in a single computational cycle and with the same efficiency, processor **1** may retrieve and independently store each pixel value in a separate register to be combined by either horizontal or vertical filters. With each pixel value to be combined by the filters stored in a different register, processor **1** may compute linear (or non-linear) combinations for both horizontal filters and vertical filters.

In general, processor **1** may retrieve pixel values to be combined to be reoriented as a column for any directional filter, (for example, diagonal, $\dfrac{\pm\pi}{n}$ radians,

etc.). In this way, processor **1** may individually store each pixel value to be combined at a separate register address for independent manipulation in the same computational cycle. Furthermore, for any non-directional filter (for example, a filter not having a predominant directionality, such as pixels spanning a two-dimensional block), processor **1** may store each pixel value to be combined by the filter into a separate register in the same computational cycle for independently manipulating the pixel values, for example, in parallel or simultaneously.

Conventional processors typically use extra (multiple) steps to independently store in separate registers pixel values which were retrieved from the same row of an image, to independently manipulate these values for horizontal filters as compared to a single computational cycle for retrieving and independently storing pixel values for vertical filters. In contrast, processor **1** operating according to embodiments of the invention may retrieve and independently store in a separate register each pixel value to be combined by either horizontal or vertical filters in a single computational cycle for applying either filter with the same efficiency.

Another advantage of embodiments of the invention is reducing program and memory resources used for filtering. In conventional systems, horizontal and vertical filters are two separate filters operating with two different schemes, for example, identifying different spatial relationships of the adjacent pixels to be combined, for example, in a row or in a column segments, respectively. Accordingly, conventional horizontal and vertical filters use separate instruction schemes and memory resources. However, according to embodiments of the invention, by simply transposing the data on which the filter operates, the processor automatically switches between running a vertical and a horizontal filter. That is, when the pixel values are transposed, a horizontal filter is equivalent to a vertical filter. Accordingly, a single filter may be used for both horizontal and vertical filtering, thereby reducing the use of program and memory resources by a factor of two. In general, the processor may re-orient any set of pixels combined in any filter to a column of an internal memory register unit to be independently manipulated. Accordingly, a single filter may be used to combine pixels for a filter of any direction and/or a non-directional filter, thereby reducing the use of program and memory resources by a factor equal to the number of different filters used on an image. In some embodiments, programs may increase the number of directional or non-directional filters used to process an image without increasing the overhead and/or computation or memory resources.

Reference is made to Fig. **2A**, which schematically illustrates a multiple dimensional data array **200** for storing video and imaging data helpful in understanding embodiments of the invention.

Data array **207** may be an (n x m) data block on which a horizontal filter is to be executed. Data array **200** may be an (n x (m+q)) data block including data array **207** and the adjacent pixels values used to run the horizontal filter on data array **207**. The linear combination for the horizontal filter may combine each pixel value in the data array **207** with (q) horizontally adjacent terms, including terms preceding the pixel values and/or terms succeeding the pixel value in the same row. The linear combination may or may not include the value to be filtered itself, for example, combining (q+1) or (q) pixel values, respectively.

In the example in Fig. **2A**, data array **207** is an (8x9) data block for filtering a (8x4) data array **207** and the linear combination may include (q+1)=(6) pixel values including the (1) pixel value to be filtered and (q)=(5) horizontally adjacent pixel values, for example, the (2) preceding pixel values and (3) succeeding pixel values. For example, the filter equation may be a linear weighted sum of (q+1)=(6) terms, such as, $(x_1 - 5{*}x_2 + 20{*}x_3 + 20{*}x_4 - 5{*}x_5 + x_6 + 16) / 32$, where $x_i$ is the vector for the pixel values in register $v_i$.

It may be appreciated that data arrays **200** and **207** may have other sizes or dimensions and the linear combination may include any number of terms or pixel values from the same row, including adjacent pixel values only preceding, only succeeding, both preceding and succeeding the pixel value to be filtered, including or not including the pixel value to be filtered and which may or may not be sequentially listed. In one embodiment, increasing the number of pixel values (q) or (q+1) combined in the linear combination for a horizontal filter may increase the width dimension (m+q) of the data array **200** used for horizontally filtering data array **207**. Similarly, increasing the number of pixel values combined for a vertical filter, increases the height dimension (n) of the data array **200** used for vertically filtering data array **207**. The example in Fig. **2A** may be used for a horizontal motion compensation filter, or alternatively may be used for or adapted to be used for any other type of filter, such as de-blocking filters.

According to embodiments of the invention, there is provided herein a mechanism for horizontal filtering including retrieving pixel values from a data array **200** of Fig. **2A** having an initial orientation in a first memory unit and loading and storing the pixel values in a second memory unit in a transposed orientation (for example, as transposed data array **200'** of Fig. **2B**). A processor may ensure that each pixel value retrieved from the same row of the initial data array **200** is stored in a different row of transposed data array and therefore a different register of the internal memory unit to be independently manipulated simultaneously for horizontal filter operations. In some embodiments, the processor may be instructed to execute the transpose retrieval operation when a command is received for a horizontal filter, but not for a vertical filter. However, in other embodiments where pixel values stored in each register are retrieved from columns, instead of rows, the processor may accordingly be instructed to execute the transpose retrieval operation when a command is received for a vertical filter, but not for a horizontal filter.

Reference is made to Fig. **2B**, which schematically illustrates a data array **200'** transposed from data array **200** of Fig. **2A** for executing a horizontal filter according to embodiments of the invention.

A processor executing a horizontal filter may transpose pixel values having an initial position or index in data array **200** of Fig. **2A** to a new relatively transposed position or index in data array **200'** of Fig. **2B**. For example, each pixel $p_{ij}$ in data array **200** may be re-oriented to a new position $p_{ji}$ in data array **200'**. Accordingly, the $(n \times (m+q))$ data array **200** may be transposed to a $((m+q) \times n)$ data array **200'**, such that each $(n^{th})$ row of elements of data array **200** may be re-oriented as the $(n^{th})$ column of data array **200'**. For example, pixel values (00)-(08) of the first row of data array **200** may be re-oriented as the first column of data array **200'**. In the example in Figs. **2A** and **2B**, a (8x9) data array **200** may be transposed to a (9x8) data array **200'**.

The processor may retrieve and transpose pixel values individually or in groups or sub-arrays **201-206**. Each sub-array **201-206** from data array **200** may be reoriented in a transposed orientation to form sub-arrays **201'-206'** of data array **200'**. In some embodiments, the sub-arrays **201-206** may be retrieved row-by-row in (8) or (16) load/store cycles. In other embodiments, each complete sub-array **201-206** may be retrieved in a single (1) load/store cycle, as described in U.S. Application No. 12/797,727.

The transposed data array **200'** may be stored in internal memory row-by-row in registers **208** (for example, individually addressable memory units **16** of Fig. **1**), where each register **208** stores values of pixels oriented or loaded as a single row. Since a row of pixel values in data array **200** combined in a horizontal filter are loaded as a column in transposed data array **200'**, and each register **208** stores pixel values loaded as a single row, each of the combined pixel values may be stored in a separate one of (m+q)=(9) registers **208**, v0-v8. A processor may apply the filter by independently manipulating pixel values stored in separate registers **208**. The processor may independently access each register **208** via a separate address. Since all pixel values used for each linear combination of a horizontal filter are stored in separate respective registers **208**, the processor may independently retrieve, multiply, and combine all such pixel values.

Since each register **208** stores data elements oriented as a row, and vertical filters combine pixel values retrieved from a single column, each set of pixel values combined in the same linear combination may be automatically loaded into separate registers **208**, v0-v8. Accordingly, for a vertical filter, the processor may store pixel values in data array **200'** in their original, non-transposed, orientation.

Reference is made to Fig. **3**, which schematically illustrates a data array **200'** for applying a filter to video and image data in accordance with embodiments of the invention. A processor may use data array **200'** to filter data array **207'**, which, for a horizontal filter is the transpose of (and therefore equivalent to filtering) original data array **207** of Fig. **2A**.

As described in reference to Figs. **2A** and **2B**, adjacent pixel values to be combined (for example, including either horizontally or vertically aligned pixels values of data array **200** of Fig. **2A** for a horizontal and vertical filter, respectively), are oriented in a single column of data array **200'** of Fig. **2B**. Accordingly, a processor may store each pixel values to be combined in a linear combination in a separate, individually addressable, register **208** for both vertical and horizontal filters. In general, the processor may also separate pixel values combined in non-directional filters or directional filters other than vertical or horizontal filters among different respective registers **208**.

To execute both horizontal and vertical filters, the processor may combine (q+1) vertically aligned pixel values in each column segment of data array **200'** to filter each pixel in the same column. The processor may filter multiple pixels at once. In one embodiment, the processor may use each $((q+1) \times n)$ data array **209'** to filter each $(1 \times n)$ row of pixels in data array **200'** with adjacent values in their respective $((q+1) \times 1)$ column segments. For example, the processor may use the first (6x8) data array **209'** to filter the first row **210** of data array **200'**. The processor may use the second (6x8) data array **209'** (a vertically sequential $((q+1) \times n)$ data array one row lower than the first data array **209'**) to filter the next sequential row of pixels **211** in data array **200'**, and so on. The processor may continue to filter each sequential row **210**, **211**, **212**, and **213** of data array **207'** using each sequential $((q+1) \times n)$ data array **209'** of data array **200'** until the entire data array **207'** is filtered. In total, to filter all (m) rows in the $(m \times n)$ data array **207'** with a sequential $((q+1) \times n)$ data array **209'**, the entire $((m+q) \times n)$ data array **200'** may be used.

The processor may generate a filtered data array **214'** which is the filtered combination of data array **207'** with adjacent pixel values from data array **200'**. Each row of filtered pixel values of filtered data array **214'** may be stored in a separate register **208**, for example, registers v9-v12, in internal memory.

Once the filtered data array **214'** is generated, the processor may store and use the filtered pixel values. If a vertical filter was used and the original data array **207** and **200** were never transposed for registers **208**, the processor may store and use the filtered pixel values in their register **208** orientation. However, if a horizontal filter was used and the original data arrays **207** and **200** of Fig. **2A** were transposed into registers **208** of Figs. **2B** and **3**, the processor may (or may not) reorient the transposed data arrays **207'** and **200'** to their original non-transposed orientations (for example, depending on the orientation needed for the next operation). Since the inverse of a transpose mapping is another transpose mapping, the same transpose mapping may be used to return transposed filtered data array **214'** to a non-transposed filtered data array **214**. Accordingly, just as the processor may use a transpose mapping to load data arrays into registers for horizontal and not vertical filtering, the processor may use the same transpose mapping to transfer filtered data arrays out of the registers that have been horizontally and not vertically filtered.

In one embodiment, a mapping unit **6** may be used to transpose the pixel values. In another embodiment, registers **208** of Fig. **2B** may have a sequence of address ports with addresses, where the addresses of the address ports are themselves re-ordered or transposed. In such embodiments, the addresses of the address ports may be ordered according to the order in which the pixel values are to be transferred thereinto. For example, instead of the first register being indexed or addressed for the 1st, 2nd, 3rd, ..., pixel values, the first register may be indexed for the 1st, 10th, 20th, ..., pixel values. Accordingly, processor **1** may automatically transpose the pixel values from data array **200** of Fig. **2A** according to the sequential addresses of the plurality of registers **208** of Fig. **2B** and no separate mapping unit is needed (although a mapping unit may be used).

It may be appreciated that although embodiments of the invention are described in reference to filtering data in a (8x4) 2D data array, any rectangular sub-array may be used, for example, (3x5), (4x4), (4x6), (8x8), (4x16), (16x16), or any (m x n) sub-array for any integers (m) and (n). Furthermore, although the size of the data block used to filter the 2D data array (e.g., filter data array **209'** of Fig. **3**) is shown to be a ((q+1) x n) = (6x8) sub-array, any (s x n) size sub-array may be used. It may also be appreciated that higher dimensional, for example, three-dimensional (3D) data arrays may be used, which may be represented by a 3D matrix or tensor data structure. In one example, LUMA data elements may be represented in a 2D data array, while Chroma data elements are represented in a 2D or 3D data array.

It may be appreciated that embodiments of the invention may use other or different dimensions for rows, columns, or data arrays, numbers of pixel values combined in linear or non-linear filter combinations, orientations of original or transposed data arrays, numbers or orientations of individually addressable registers **208**, and computational cycles.

In some embodiments, a processor may initially store data elements in the data array **200** of Fig. **2A** in an internal memory (for example, internal memory unit **14** of Fig. **1**) and a processor may re-order, map, transpose, sequence, or otherwise rearrange the pixel values into the data array **200'** of Fig. **2B** in registers (for example, registers unit **16** of Fig. **1**). In other embodiments, the processor may store pixel values in the data array **200'** of Fig. **2B** in an external memory (for example, external memory unit **2** of Fig. **1**) and transpose the pixel values into the data array **200'** of Fig. **2B** in an internal memory (for example, internal memory unit **14** of Fig. **1**); however other memory arrangements may be used.

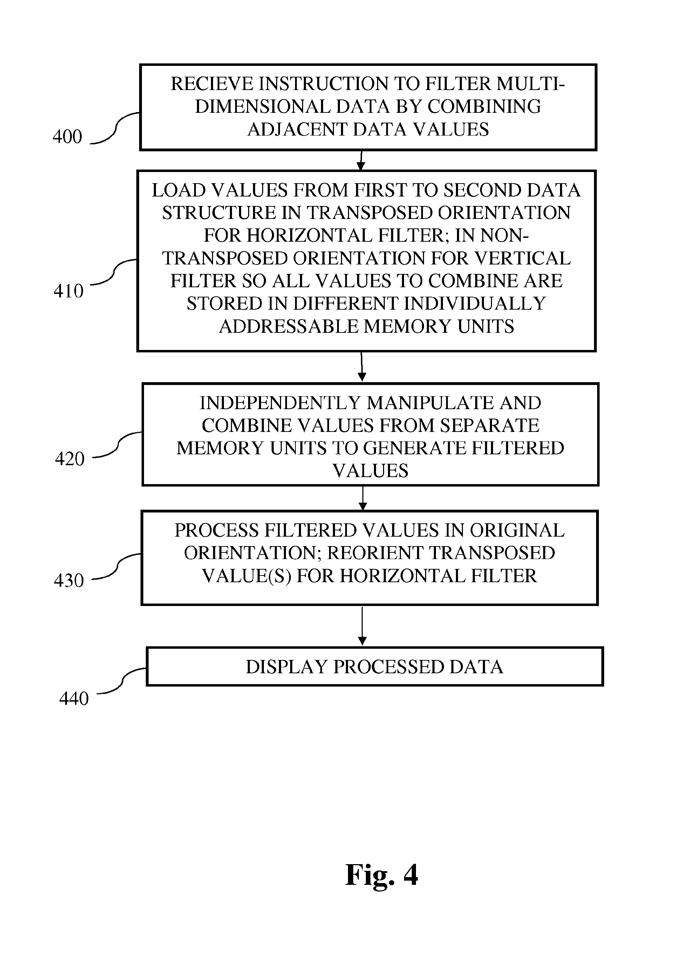

Reference is made to Fig. **4**, which is a flowchart of a method for filtering multi-dimensional data, according to embodiments of the invention.

In operation **400**, a processor (for example, processor **1** of Fig. **1**) may receive an instruction from a program memory (for example, in external memory **2** or storage unit **4** of Fig. **1**) to filter one or more value(s) in a multi-dimensional data set, for example, pixel(s) in a digital video or image. The instruction may indicate the values or addresses thereof to be combined for filtering. The instruction may indicate whether the filter is a horizontal or a vertical filter and/or if the filter is another directional or non-directional filter.

A first multi-dimensional data structure may represent values of the multi-dimensional data set. An instruction to execute a horizontal filter may designate for combination values horizontally aligned in a single row of the first data structure (for example, data array **200** of Fig. **2A**), while an instruction to execute a vertical filter may designate for combination values vertically aligned in a single column of the first data structure. In general, an instruction to execute any filter may designate for combination values in any arbitrary pattern of the first data structure.

In operation **410**, the processor may load values designated for combination from the first data structure into a second data structure (for example, data structure **200'** of Fig. **2B**). The second data structure may include a plurality of individually addressable memory units (for example, registers **208** of Figs. **2B** and **3**). In one embodiment, the first data structure may be stored in internal memory and the second data structure may be stored in the individually addressable memory units of the same or different internal memory (for example, internal memory unit **14** and individually addressable memory units **16**, respectively, of Fig. **1**). Alternatively both data structures may be stored in internal memory or external memory or one data structure may be stored in external memory and the other data structure is stored in internal memory. The individually addressable memory units may be individually accessible via different addresses and/or address ports. In one embodiment, the values may be pixel values and the data structures may represent image or video data, although other types of multi-dimensional data may be used.

For a horizontal filter, to separate values retrieved from the same row of the first data structure into separate individually addressable memory units for individual manipulation for horizontal filtering, the processor may retrieve the values in a transposed orientation. Accordingly, values which were horizontally aligned in a single row of the first data structure may be vertically aligned in a single column of the second data structure.

For a vertical filter, vertically aligning values may be unnecessary since the values are already stored in a single column.

Accordingly, the processor may retrieve values for horizontal filters in a transposed orientation and values for vertical filters in a non-transposed orientation to automatically load values to be combined by filters in separate individually addressable memory units. In one embodiment, in which a flag or register value indicates if the filter is a vertical filter (flag==0) or a horizontal filter (flag==1), the processor may retrieve values in an orientation based on the value of the flag (for example, in a non-transposed orientation for flag==0 and in a transposed orientation for flag==1).

In operation **420**, the processor may combine the designated values using a linear or non-linear weighted combination of adjacent values, for example, as defined by the filter instruction. Since the values to be combined by the filter are separately stored in different individually addressable memory units, the processor may independently multiply and combine each of the values. The generated filtered values may be stored in a third data structure (for example, filtered data array **214'** of Fig. **3**), for example, in available individually addressable memory units.

In operation **430**, the processor may transfer, store, process, or otherwise use the filtered values from the third data structure. If a vertical filter was used, the second and third data structures may have the same original orientation as the first data structure and the processor may use the filtered values in their final orientation in the individually addressable memory units. However, if a horizontal filter was used, the orientation of the second and third data structures is transposed from the original orientation of the first data structure and the processor may (or may not) load or transfer values from the second or and third data structures in a transposed orientation, for example, for storage in one or more memory units external to the individually addressable memory units. In one embodiment, transposing an already transposed structure may reorient the filtered values to their original non-transposed orientations. To revert from a transposed orientation, the processor may apply another transpose mapping to the third data structure to generate the filtered values in their original orientation (for example, non-transposed filtered data array **214** of Fig. **3**).

The processor may iteratively run filter operations **400-430**, setting each sequential data array of the multi-dimensional data to be represented by the first data structure for each iteration, for example, until the entire array of multi-dimensional data (for example, an entire image frame or audio file) is filtered.

In operation **440**, an output device (for example, output device **102** of Fig. **1**) may output the filtered multi-dimensional data. For example, the output device may display an image with filtered pixel values or an audio file with filtered audio values.

Other operations or series of operations may be used.

It should be appreciated by a person skilled in the art that although embodiments of the invention are described in reference to video or image data that any data having the same or similar digital structure but pertaining to different data types may be used. For example, audio data, graphic data, multimedia data, or any multi-dimensional data may be used.

It should be appreciated by a person skilled in the art that although embodiments of the invention describing systems, data structures, and methods for transposing values from one data array to another data array, in other embodiments of the invention the original data structure may equivalently be assigned a different address scheme, for example, without actually moving or re-positioning the values themselves.

It may be appreciated that although bursts are described to retrieve values and registers are described to store values row-by-row, bursts and registers may alternatively operate column-by-column. In such an embodiment, horizontally aligned values to be combined in a horizontal filter are automatically loaded in a non-transposed orientation, while vertically aligned values to be combined in a vertical filter are loaded in a transposed orientation.

It may be noted that linear filtering may use an operation called a convolution. Convolution is an operation in which each output pixel is the weighted sum of adjacent pixel values, where the matrix of weights is referred to as a "convolution kernel" or the "filter." A convolution kernel is a correlation kernel that has been rotated 180 degrees. It should be appreciated by a person skilled in the art that the rotation of the filter or correlation kernel is different from the transposition described hereinabove since rotating is different from transposing and furthermore, the convolution rotates the correlation kernel (an operator on pixel arrays) and not the pixel array itself.

Embodiments of the invention may include an article such as a computer or processor readable medium, or a computer or processor storage medium, such as for example a memory, a disk drive, or a USB flash memory, for encoding, including or storing instructions which when executed by a processor or controller (for example, processor **1** of Fig. **1**), carry out methods disclosed herein.

Although the particular embodiments shown and described above will prove to be useful for the many distribution systems to which the present invention pertains, further modifications of the present invention will occur to persons skilled in the art. All such modifications are deemed to be within the scope and spirit of the present invention as defined by the appended claims.

**Claims**

1.  A method for filtering a first multi-dimensional data structure, the method comprising:

    receiving an instruction to execute a horizontal filter by combining values horizontally aligned in a single row of the first data structure;
    loading at least the values to be combined from the single row of the first data structure in a transposed orientation for storage as a single column in a second multi-dimensional data structure in an internal memory so that each transposed value in the single column is separately stored in a different respective one of a plurality of individually addressable memory units in the internal memory; and
    independently manipulating and combining each value designated for combination by the horizontal filter by accessing the separate individually addressable memory units storing each of the transposed values.

2.  The method of claim 1, comprising:

    receiving an instruction to vertically filter by combining values vertically aligned in a single column of the first data structure; and
    loading the values to be combined from the single column of the first data structure in the same non-transposed orientation for storage as a single column in a data structure in the internal memory.

3.  The method of claim 1, comprising:

    receiving an instruction to filter by combining values which are arranged in any arbitrary pattern of the first data structure; and
    loading the values to be combined from the first data structure for storage as a single column in a data structure in the internal memory.

4.  The method of claim 1, wherein the filter combines the designated values using a linear combination of the values.

5.  The method of claim 1, wherein the filter combines the designated values using a non-linear combination of the values.

6.  The method of claim 1, wherein a flag or register value indicates whether the filter is a horizontal or vertical filter.

7.  The method of claim 1, wherein the first data structure is stored in an initial orientation in a tightly-coupled memory and the second data structure is stored in a transposed orientation in the individually addressable memory units, wherein the tightly-coupled memory and the individually addressable memory units are internal or directly accessible to the same processor.

8.  The method of claim 1, comprising transferring values from the second data structure in a transposed orientation for storage in one or more memory units external to the individually addressable memory units.

9.  The method of claim 1, wherein the values are pixel values and the data structures represent image or video data, and the method comprises displaying the image with the filtered pixel values.

10. A processor for filtering a first multi-dimensional data structure, the processor comprising:

    an internal memory comprising a plurality of individually addressable memory units directly accessible to the processor; and
    a load unit to retrieve values horizontally aligned in a single row of the first data structure and to store the horizontally aligned values in a transposed orientation vertically aligned in a single column in a second multi-dimensional data structure in the individually addressable memory units of the internal memory so that each transposed value in the single column is separately stored in a different respective one of a plurality of individually addressable memory units in the internal memory, wherein the processor is to independently manipulate and combine each value designated for combination by the horizontal filter by accessing the separate individually addressable memory units storing each of the transposed values.

11. The processor of claim 10, wherein when the processor receives an instruction to vertically filter the image by combining values vertically aligned in a single column of the first data structure, the load unit loads the values to be combined from the single column of the first data structure in the same non-transposed orientation for storage as a single column in a data structure in the internal memory.

12. The processor of claim 10, wherein when the processor receives an instruction to filter by combining values which are arranged in any arbitrary pattern of the first data structure, the load unit loads the values to be combined from the first data structure for storage as a single column in a data structure in the internal memory.

13. The processor of claim 10, wherein the load unit transfers values from the second data structure in a transposed orientation for storage in one or more memory units external to the individually addressable memory units.

14. The processor of claim 10, wherein the processor loads the values from the second data structure in a transposed orientation for storage in one or more memory units external to the individually addressable memory units.

15. A system for filtering multi-dimensional data, the system comprising:

> a first multi-dimensional data structure in a first memory unit for storing values of the multi-dimensional data;
> a processor to receive an instruction to execute a horizontal filter by combining values horizontally aligned in a single row of the first data structure;
> a second data multi-dimensional structure in an internal memory unit comprising a plurality of individually addressable memory units directly accessible to the processor; and
> a load unit to load at least the values to be combined from the single row of the first data structure in a transposed orientation for storage as a single column in the second data structure in the individually addressable memory units of the internal memory so that each transposed value in the single column is separately stored in a different one of a plurality of individually addressable memory units in the internal memory, wherein the processor is to independently manipulate and combine each value designated for combination by the horizontal filter by accessing the separate individually addressable memory units storing each of the transposed values.

**Fig. 1**

**Fig. 2A**

**Fig. 2B**

(8x9)

(9x8)

208 v0

| | 00 | 10 | 20 | 30 | 40 | 50 | 60 | 70 |

v1 | 01 | 11 | 21 | 31 | 41 | 51 | 61 | 71 |

v2 | 02 | 12 | 22 | 32 | 42 | 52 | 62 | 72 |  210

v3 | 03 | 13 | 23 | 33 | 43 | 53 | 63 | 73 |  211

v4 | 04 | 14 | 24 | 34 | 44 | 54 | 64 | 74 |  212

v5 | 05 | 15 | 25 | 35 | 45 | 55 | 65 | 75 |  213

v6 | 06 | 16 | 26 | 36 | 46 | 56 | 66 | 76 |

v7 | 07 | 17 | 27 | 37 | 47 | 57 | 67 | 77 |

v8 | 08 | 18 | 28 | 38 | 48 | 58 | 68 | 78 |

v9 $(x0 - 5x1 + 20x2 + 20x3 - 5x4 + x5 + 16)/32$

v10 $(x1 - 5x2 + 20x3 + 20x4 - 5x5 + x6 + 16)/32$

v11 $(x2 - 5x3 + 20x4 + 20x5 - 5x6 + x7 + 16)/32$

v12 $(x3 - 5x4 + 20x5 + 20x6 - 5x7 + x8 + 16)/32$

207'  209'  200'  214'

214

| 00 | 01 | 02 | 03 |
| 10 | 11 | 12 | 13 |
| 20 | 21 | 22 | 23 |
| 30 | 31 | 32 | 33 |
| 40 | 41 | 42 | 43 |
| 50 | 51 | 52 | 53 |
| 60 | 61 | 62 | 63 |
| 70 | 71 | 72 | 73 |

**Fig. 3**

```
400 ──┐
       ┌──────────────────────────────────────────┐
       │   RECIEVE INSTRUCTION TO FILTER MULTI-    │
       │     DIMENSIONAL DATA BY COMBINING         │
       │         ADJACENT DATA VALUES              │
       └──────────────────────────────────────────┘
                          │
                          ▼
       ┌──────────────────────────────────────────┐
       │   LOAD VALUES FROM FIRST TO SECOND DATA   │
       │   STRUCTURE IN TRANSPOSED ORIENTATION     │
       │      FOR HORIZONTAL FILTER; IN NON-       │
410 ──│  TRANSPOSED ORIENTATION FOR VERTICAL       │
       │   FILTER SO ALL VALUES TO COMBINE ARE     │
       │      STORED IN DIFFERENT INDIVIDUALLY      │
       │        ADDRESSABLE MEMORY UNITS           │
       └──────────────────────────────────────────┘
                          │
                          ▼
       ┌──────────────────────────────────────────┐
       │    INDEPENDENTLY MANIPULATE AND           │
       │    COMBINE VALUES FROM SEPARATE           │
420 ──│  MEMORY UNITS TO GENERATE FILTERED         │
       │              VALUES                       │
       └──────────────────────────────────────────┘
                          │
                          ▼
       ┌──────────────────────────────────────────┐
       │   PROCESS FILTERED VALUES IN ORIGINAL     │
       │    ORIENTATION; REORIENT TRANSPOSED       │
430 ──│   VALUE(S) FOR HORIZONTAL FILTER           │
       └──────────────────────────────────────────┘
                          │
                          ▼
       ┌──────────────────────────────────────────┐
       │         DISPLAY PROCESSED DATA            │
       └──────────────────────────────────────────┘
440 ──┘
```

# Fig. 4

Europäisches
Patentamt

European
Patent Office

Office européen
des brevets

## EUROPEAN SEARCH REPORT

**Application Number**

EP 11 16 9871

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/008429 A1 (ENDRESEN LARS P [NO]) 14 January 2010 (2010-01-14) * column 23 - column 84 * ----- | 1-15 | INV. G06T1/60 |
| X | US 2009/016450 A1 (WANG BING-YAU [TW] ET AL) 15 January 2009 (2009-01-15) * paragraph [0032] - paragraph [0057] * * claim 1 * ----- | 1-15 | |
| X | US 5 867 608 A (RICE DANIEL S [US]) 2 February 1999 (1999-02-02) * column 3, paragraph 34 - column 6, paragraph 25 * * claim 1 * ----- | 1-15 | |

| | |
|---|---|
| | **TECHNICAL FIELDS SEARCHED (IPC)** |
| | G06T |

The present search report has been drawn up for all claims

| Place of search | Date of completion of the search | Examiner |
|---|---|---|
| Munich | 23 September 2011 | Rockinger, Oliver |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 11 16 9871

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2011

| Patent document cited in search report | | Publication date | Patent family member(s) | | Publication date |
|---|---|---|---|---|---|
| US 2010008429 | A1 | 14-01-2010 | CN | 102090064 A | 08-06-2011 |
| | | | EP | 2311265 A1 | 20-04-2011 |
| | | | NO | 329837 B1 | 03-01-2011 |
| | | | WO | 2010005316 A1 | 14-01-2010 |
| US 2009016450 | A1 | 15-01-2009 | NONE | | |
| US 5867608 | A | 02-02-1999 | CA | 2189620 A1 | 08-05-1997 |
| | | | DE | 69629265 D1 | 04-09-2003 |
| | | | DE | 69629265 T2 | 27-05-2004 |
| | | | EP | 0773512 A2 | 14-05-1997 |
| | | | SG | 75105 A1 | 19-09-2000 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 79772710 A

- US 797727 A